# EUROPEAN PATENT SPECIFICATION

(11) **EP 4 279 396 B1**
(45) Date of publication and mention of the grant of the patent: **02.07.2025**
(21) Application number: 22174685.2
(22) Date of filing: 20.05.2022
(51) Int. Cl.: B64D 47/00, H01R 13/03, H01R 12/00

(54) **ELECTRICAL SYSTEM FOR AN AIRCRAFT**
ELEKTRISCHES SYSTEM FÜR EIN LUFTFAHRZEUG
SYSTÈME ÉLECTRIQUE POUR UN AÉRONEF

(43) Date of publication of application: 22.11.2023
(73) Proprietor: Airbus Operations GmbH, 21129 Hamburg (DE); Airbus SAS, 31700 Blagnac Cedex (FR)
(72) Inventor: FRIEDBERGER, Alois, 21129 Hamburg (DE); HELWIG, Andreas, 21129 Hamburg (DE); LINDE, Peter, 21129 Hamburg (DE)
(74) Representative: Isarpatent

(56) References cited:
- DE-A1- 102006 031 322
- US-B2- 10 177 471
- US-B2- 10 686 300

## Description

The present invention is directed to an electrical system for an aircraft.

The current state of the art in electrical devices in aircrafts is based on separate electrical harness, analogue devices, and separate mechanical fastening of devices. For example, switches are attached on mounting plates, secured with fastener elements and connected via electrical cables.

All these parts have to be manufactured separately, collected, and installed manually. The end result is a certain amount of cost for the parts, cost for the labor of installation, and a certain amount of weight and space for the installation. In aircrafts, especially weight and space of components is always something that is desirably reduced as much as possible.

In view of the above, the present invention aims to reduce the spatial and weight requirements of components to be installed in an aircraft, in particular components comprising electrical features.

According to the present invention, this problem is solved by an electrical system with the features of independent claim 1.

One idea of the present invention lies in combining the electrical connection and the mechanical connection into one singular connection. In this way, no separate means of establishing the electrical connection and the mechanical connection respectively are needed, advantageously reducing the space and weight of the components and thereby the space and weight required by the electrical system.

Advantageous embodiments and further developments are apparent from the further dependent claims and from the description with reference to the figures.

According to the invention, the at least one connection interface is configured to easily release the electrical connection and the mechanical connection. This allows for advantageously easy replacement of components after initial installation.

According to an embodiment of the invention, the first component comprises a flexible material. This can provide an advantage during installation of the component, depending on its dimensions.

According to the invention, the at least one connection interface of the first component and the at least one connection interface of the second component are connected by a foil comprising nanowires. This allows for an advantageously simplified fabrication of the components.

According to an embodiment of the invention, the first component and the second component are further connected by an adhesive. In this way, the mechanical stability of the connection can be further improved.

The present invention is explained in more detail below with reference to the embodiments shown in the schematic figures.
- Fig. 1: shows a schematic illustration of an electrical system according to an embodiment of the invention in a pre-assembled state; and
- Fig. 2: shows a schematic illustration of an electrical system according to a further embodiment of the invention during assembly.

The accompanying figures are intended to provide a further understanding of embodiments of the invention. They illustrate embodiments and, in connection with the description, serve to explain principles and concepts of the invention. Other embodiments and many of the advantages mentioned will be apparent with reference to the drawings. The elements of the drawings are not necessarily shown to scale with respect to each other.

In the figures of the drawings, identical elements, features and components that have the same function and the same effect are each given the same reference signs, unless otherwise specified.

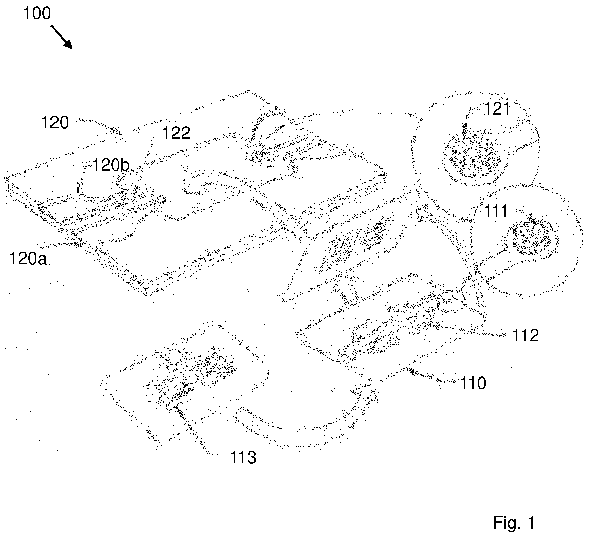

Fig. 1 shows an electrical system 100 according to an embodiment of the invention in a pre-assembled state, wherein a first component 110 of the electrical system 100 is shown at different points in time.

The electrical system 100 comprises a first component 110 and a second component 120. In the embodiment shown, the first component 110 takes the form of a circuit board, and the second component takes the form of a cabin panel built of a composite material. The first component 110 comprises a plurality of connection interfaces 111, one of which is shown in an exploded view, an electronic circuit 112, and functional areas 113 on a side opposite to the side, on which the connection interfaces 111 and the electronic circuit 112 are arranged. The second component 120 comprises a plurality of connection interfaces 121, one of which is shown in an exploded view, and an electronic circuit 122. The second component 120 further comprises a first ply 120a on which the connection interfaces 121 and the electronic circuit 122 are arranged, and a second ply 120b, which forms a cover ply to the first ply 120a. The second ply 120b comprises a cut-out area granting access to the connection interfaces 121 and the electronic circuit 122.

In the embodiment shown, the connection interfaces 111 of the first component 110 and the connection interfaces 121 of the second component 120 comprise nano wires arranged within a circular area, and are connected to the electronic circuits 112 and 122 respectively. The connection interfaces 111 of the first component 110 and the connection interfaces 121 of the second component 120 are arranged such that when the first component 110 is placed into the cut-out area of the second component 120, at least some of the connection interfaces 111 of the first component 110 overlap at least some of the connection interfaces 121 of the second component 120. When connection interfaces 111 and 121 of the first component 110 and second component 120 contact each other, their respective nano wires can be connected through the application of pressure, heat, or electrical current, thereby establishing both an electrical connection and a mechanical connection simultaneously.

A nano wire is a nano structure with the diameter of the order of a nano meter and that exhibits length-to-width ratios of 1000 or more. They can be manufactured top-down or bottom-up and can be made of different materials such as silver, nickel, tin selenide, etc. Nano wires can display considerable mechanical and electrical properties, in particular for establishing connection. Due to the extremely high surface area of the many nano wires, the inter diffusion process of atoms between neighboring nano wires can lead to immediate welding within a few milliseconds, even at room temperatures. Consequently, the two components form a strong mechanical joint which is at the same time a very good electrical connection and also highly thermally conductive. If electrical current is utilized to facilitate the welding process, the electrical connection can be directly tested during its establishing.

Another advantage of using nano wires is that the connection between the nano wires can be temporarily loosened by applying heat and/or electrical current. This can be facilitated if an adhesive is involved in the connection process. In this way, the connection between the components can be easily severed and, for example, the first component can be replaced.

The first component 110 shown in Figure 1 comprises at least some connection interfaces 111 which have no complement on the second component 120. In this way, the first component 110 can be configured to be connected to other components which may have a different layout of connection interfaces than the second component shown in Figure 1. Depending on the configuration of the connection interfaces 111, said connection interfaces 111 without direct complement could also be used to establish a mechanical connection between the first component 110 and the second component 120 without establishing an electrical connection.

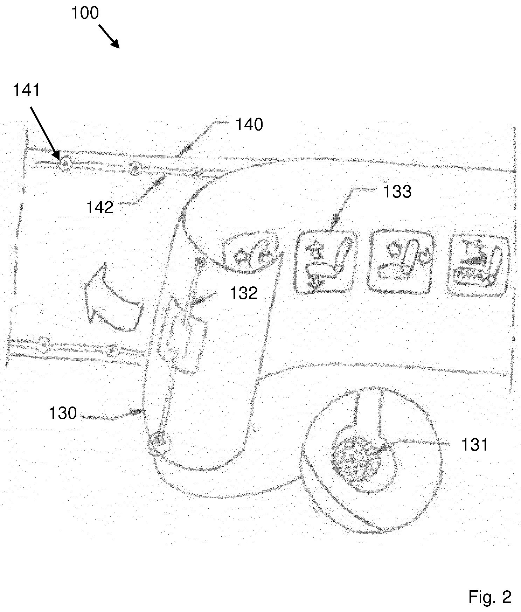

Fig. 2 shows an electrical system 100 according to a further embodiment of the invention during assembly.

The electrical system 100 comprises a first component 130 and a second component 140. In the embodiment shown, the first component 130 takes the form of a functional decor foil, and the second 140 component takes the form of a cabin panel. The first component 130 comprises a plurality of connection interfaces 131, one of which is shown in an exploded view, an electronic circuit 132, and functional areas 133 on a side opposite to the side on which the connection interfaces 131 and the electronic circuit 132 are arranged. The second component 140 comprises a plurality of connection interfaces 141 and an electronic circuit 142.

In the embodiment shown, the connection interfaces 131 of the first component 1 130 and the connection interfaces 141 of the second component 140 comprise nano wires arranged within a circular area, and are connected to the electronic circuits 132 and 142 respectively. The connection interfaces 131 of the first component 130 and the connection interfaces 141 of the second component 140 are arranged such that when the first component 130 is placed on top of the second component 140, at least some of the connection interfaces 131 of the first component 130 overlap at least some of the connection interfaces 141 of the second component 140. When connection interfaces 131 and 141 of the first component 130 and second component 140 contact each other, their respective nano wires can be connected through the application of pressure, heat, or electrical current, thereby establishing both an electrical connection and a mechanical connection simultaneously.

The first component 130 shown in Figure 2 comprises a flexible material and can be bent during installation in such a way, that not all connection interfaces 131 of the first component 130 come into contact with their complementary connection interfaces 141 of the second component 140. This can lead to an easier installation of the first component 130 with respect to the second component 140, in particular if the first component 130 exceeds a certain length and/or width, compared to e.g. the components shown in Figure 1, which are relatively compact, and which can therefore benefit from comprising rigid materials.

In Figures 1 and 2, nano wire bonding, wherein corresponding pairs of connection interfaces comprise nano wires. has been shown as an example of simultaneously establishing an electrical connection and a mechanical connection. This technology is advantageous as it provides beneficial properties concerning electrical and mechanical connectivity combined with a relative ease of processing. However, it is also possible for only one of a corresponding pair of connection interfaces to comprise nano wires, as even when the corresponding partner comprises, for example, only a metal coating, a sufficiently secure electrical and mechanical connection can be established, depending on the configurations of the components to be connected. Foregoing nano wires on a component itself can lead to easier manufacturing of said component. Consequently, it is also possible that neither of the components comprises nano wires itself. It could be possible to provide the connection interfaces of the components with metal coatings or plates which are then connected using a thin foil comprising nano wires, in a process similar to the process used when connecting connection interfaces comprising nano wires. It is additionally possible to connect connection interfaces comprising metal coatings or plates using a conductive adhesive or by providing the connection interfaces with apertures which can receive a fastener, like a screw or a bolt, which advantageously comprises a metal to reinforce the electrical connection between the connection interfaces.

In Figure 1 and 2, various examples of components for an aircraft have been shown. The present invention is not to be limited to these examples but is intended to cover any electrical system for an aircraft falling within the scope of the appended claims.

### List of Reference Signs

- 100: electrical system
- 110: component; first component
- 111: connection interface
- 112: electronic circuit
- 113: functional area
- 120: component; second component
- 120a: first ply
- 120b: second ply
- 121: connection interface
- 122: electronic circuit
- 130: component; first component
- 131: connection interface
- 132: electronic circuit
- 133: functional area
- 140: second component
- 141: connection interface
- 142: electronic circuit

## Claims

1. Electrical system (100) for an aircraft, the electrical system comprising:
a first component (110;130) comprising at least one connection interface (111;131); and
a second component (120;140) which is a cabin panel of the aircraft and comprises at least one connection interface (121;141), wherein:
the first component (110;130) and the second component (120;140) are electrically and mechanically connected by the at least one connection interface (111;131) of the first component (110;130) and the at least one connection interface (121;141) of the second component (120;140);
the at least one connection interface (111;131) of the first component (110;130) and the at least one connection interface (121;141) of the second component (120;140) are configured to simultaneously establish an electrical connection and a mechanical connection and to easily release the electrical connection and the mechanical connection;
the at least one connection interface (111;131) of the first component (110;130) and the at least one connection interface (121;141) of the second component (120;140) are connected by a foil comprising nanowires; and
wherein the first component comprises an electronic circuit (112; 132), and functional areas (113; 133) provided on a side opposite to the side, on which the at least one connection interfaces (111; 131) and the electronic circuit (112; 132) are arranged.

2. Electrical system (100) according to claim 1, wherein the first component (110;130) and the second component (120;140) are further connected by an adhesive.

3. Electrical system (100) according to claim 1 or 2, wherein the first component (130) comprises a flexible material.

4. Electrical system (100) according to any one of claims 1 to 3, wherein the second component (120) comprises:
a first ply (120a) on which the at least one connection interfaces (121) of the second component (120) and an electronic circuit (122) are arranged, and
a second ply (120b) forming a cover ply to the first ply (120a), wherein the second ply (120b) comprises a cut-out area granting access to the at least one connection interfaces (121) of the second component (120) and the electronic circuit (122).

5. Electrical system (100) according to claim 4, wherein the first component (110) is placed into the cut-out area of the second component (120), such that at least some of the at least one connection interfaces (111) of the first component (110) overlap with at least some of the at least one connection interfaces (121) of the second component (120).

## Patentansprüche

1. Elektrisches System (100) für ein Luftfahrzeug, wobei das elektrische System umfasst:
eine erste Komponente (110; 130), die mindestens eine Verbindungsschnittstelle (111; 131) umfasst; und
eine zweite Komponente (120; 140), bei der es sich um eine Kabinenverkleidung des Luftfahrzeugs handelt und die mindestens eine Verbindungsschnittstelle (121; 141) umfasst, wobei:
die erste Komponente (110; 130) und die zweite Komponente (120; 140) elektrisch und mechanisch durch die mindestens eine Verbindungsschnittstelle (111; 131) der ersten Komponente (110; 130) und die mindestens eine Verbindungsschnittstelle (121; 141) der zweiten Komponente (120; 140) verbunden sind;
die mindestens eine Verbindungsschnittstelle (111; 131) der ersten Komponente (110; 130) und die mindestens eine Verbindungsschnittstelle (121; 141) der zweiten Komponente (120; 140) dazu ausgelegt sind, eine elektrische Verbindung und eine mechanische Verbindung gleichzeitig herzustellen und die elektrische Verbindung und die mechanische Verbindung leicht zu lösen;
die mindestens eine Verbindungsschnittstelle (111; 131) der ersten Komponente (110; 130) und die mindestens eine Verbindungsschnittstelle (121; 141) der zweiten Komponente (120; 140) durch eine Folie verbunden sind, die Nanodrähte umfasst; und wobei die erste Komponente eine elektronische Schaltung (112; 132) umfasst sowie Funktionsbereiche (113; 133), die auf einer Seite gegenüber der Seite bereitgestellt sind, auf der die mindestens eine Verbindungsschnittstelle (111; 131) und die elektronische Schaltung (112; 132) angeordnet sind.

2. Elektrisches System (100) nach Anspruch 1, wobei die erste Komponente (110; 130) und die zweite Komponente (120; 140) ferner durch einen Klebstoff verbunden sind.

3. Elektrisches System (100) nach Anspruch 1 oder 2, wobei die erste Komponente (130) ein flexibles Material umfasst.

4. Elektrisches System (100) nach einem der Ansprüche 1 bis 3, wobei die zweite Komponente (120) umfasst:
eine erste Lage (120a), auf der die mindestens eine Verbindungsschnittstelle (121) der zweiten Komponente (120) und eine elektronische Schaltung (122) angeordnet sind, und eine zweite Lage (120b), die eine Decklage für die erste Lage (120a) bildet, wobei die zweite Lage (120b) einen Ausschnittbereich umfasst, der Zugang zu der mindestens einen Verbindungsschnittstelle (121) der zweiten Komponente (120) und der elektronischen Schaltung (122) gewährt.

5. Elektrisches System (100) nach Anspruch 4, wobei die erste Komponente (110) in den Ausschnittbereich der zweiten Komponente (120) platziert wird, sodass zumindest einige der mindestens einen Verbindungsschnittstelle (111) der ersten Komponente (110) zumindest einige der mindestens einen Verbindungsschnittstelle (121) der zweiten Komponente (120) überlappen.

## Revendications

1. Système électrique (100) pour un aéronef, le système électrique comprenant :
un premier composant (110 ; 130) comprenant au moins une interface de connexion (111 ; 131) ; et
un deuxième composant (120 ; 140) prenant la forme d'un panneau de cabine de l'aéronef et comprenant au moins une interface de connexion (121 ; 141), dans lequel :
le premier composant (110 ; 130) et le deuxième composant (120 ; 140) sont connectés électriquement et mécaniquement par l'au moins une interface de connexion (111 ; 131) du premier composant (110 ; 130) et l'au moins une interface de connexion (121 ; 141) du deuxième composant (120 ; 140) ;
l'au moins une interface de connexion (111 ; 131) du premier composant (110 ; 130) et l'au moins une interface de connexion (121 ; 141) du deuxième composant (120 ; 140) sont configurées pour établir simultanément une connexion électrique et une connexion mécanique et pour rompre facilement la connexion électrique et la connexion mécanique ;
l'au moins une interface de connexion (111 ; 131) du premier composant (110 ; 130) et l'au moins une interface de connexion (121 ; 141) du deuxième composant (120 ; 140) étant connectées par une feuille comprenant des nanofils ; et dans lequel le premier composant comprend un circuit électronique (112 ; 132), et des zones fonctionnelles (113 ; 133) ménagées sur un côté opposé au côté sur lequel l'au moins une interface de connexion (111 ; 131) et le circuit électronique (112 ; 132) sont agencés.

2. Système électrique (100) selon la revendication 1, dans lequel le premier composant (110 ; 130) et le deuxième composant (120 ; 140) sont connectés en outre par un adhésif.

3. Système électrique (100) selon la revendication 1 ou 2, dans lequel le premier composant (130) comprend un matériau flexible.

4. Système électrique (100) selon l'une quelconque des revendications 1 à 3, dans lequel le deuxième composant (120) comprend :
un premier pli (120a) sur lequel l'au moins une interface de connexion (121) du deuxième composant (120) et un circuit électronique (122) sont agencés, et un deuxième pli (120b) formant un pli de recouvrement du premier pli (120a), dans lequel le deuxième pli (120b) comprend une zone découpée donnant accès à l'au moins une interface de connexion (121) du deuxième composant (120) et au circuit électronique (122).

5. Système électrique (100) selon la revendication 4, dans lequel le premier composant (110) est placé dans la zone découpée du deuxième composant (120), de sorte qu'au moins certaines de l'au moins une interface de connexion (111) du premier composant (110) chevauchent au moins certaines de l'au moins une interface de connexion (121) du deuxième composant (120).
